# EUROPÄISCHE PATENTSCHRIFT

(11) **EP 2 481 641 B1**
(45) Veröffentlichungstag und Bekanntmachung des Hinweises auf die Patenterteilung: **10.07.2013**
(21) Anmeldenummer: 11152337.9
(22) Anmeldetag: 27.01.2011
(51) Int. Cl.: B60R 21/13

(54) **Überrollschutzsystem mit unterstützender Antriebseinheit**
Rollover protection system with auxiliary drive unit
Système de protection contre les tonneaux doté d'une unité d'entraînement auxiliaire

(43) Veröffentlichungstag der Anmeldung: 01.08.2012
(73) Patentinhaber: ISE Automotive GmbH, 51702 Bergneustadt (DE)
(72) Erfinder: Hellweg, Hans-Bernd, Dr., 53819, Neunkirchen-Seelscheid (DE); Beki, Gürkan, 51766, Engelskirchen (DE)
(74) Vertreter: Kalkoff & Partner

(56) Entgegenhaltungen:
- DE-A1- 4 209 094
- DE-A1-102006 057 030

## Beschreibung

Die Erfindung betrifft ein Überrollschutzsystem für Kraftfahrzeuge, mit
- einem aus einer Ruhelage in eine Überschlagsposition verstellbaren Überrollkörper und
- einer den Überrollkörper im Gefahrenfall aus der Ruhelage in die Überschlagsposition verstellenden ersten Antriebseinheit.

Aktive Überrollschutzsysteme der eingangs genannten Art sind in vielfältigen Ausgestaltungen aus dem Stand der Technik bekannt. Sie dienen bei Cabriolets zum Schutz der Insassen bei einem Überschlag, wobei die in die Überschlagsposition aufgestellten Überrollkörper den Insassen einen Überlebensraum bereitstellen, wenn das Fahrzeug auf den in der Überschlagsposition befindlichen Überrollkörpern abrollt.

Neben starr am Fahrzeug angeordneten Überrollbügeln, welche sich sowohl über die gesamte Fahrzeugbreite erstrecken, aber auch nur jeweils hinter einem Fahrzeugsitz angeordnet sein können, weisen moderne Kraftfahrzeuge sogenannte aktive Überrollschutzsysteme auf. Bei diesen Systemen befindet sich der Überrollkörper im Normalzustand des Kraftfahrzeuges in einer im Wesentlichen unsichtbaren Ruhelage und nur im Gefahrenfall, nämlich bei einem drohenden Überschlag, findet eine Verlagerung des Überrollkörpers in die Überschlagsposition statt.

Überrollkörper, die hinter den Fahrzeugsitzen angeordnet sind und sich im Falle eines Überschlags selbsttätig aufstellen, stellen dabei eine bevorzugte Ausführungsform eines aktiven Überrollschutzsystems dar. Der Überrollkörper befindet sich dabei in der Ruhelage in Wirkverbindung mit einer ersten Antriebseinheit, die im Bedarfsfall sensorgesteuert eine Verlagerung des Überrollkörpers aus der Ruhelage in die Überschlagsposition bewirkt. Zur Bereitstellung der zur Verlagerung des Überrollkörpers dienenden Antriebsenergie weist die zugehörige Antriebseinheit in der Regel ein Federsystem auf, durch das der Überrollkörper in der Ruhelage in Richtung auf die Überschlagsposition vorgespannt ist, wobei der Überrollkörper gegenüber der Federvorspannung an einem Gehäuse des Überrollschutzsystems arretiert ist. Eine Auflösung dieser Arretierung bewirkt dann aufgrund der Federvorspannung eine unmittelbare Verstellung des Überrollkörpers in die Überschlagsposition.

Neuere Ausgestaltungen bekannter Überrollschutzsysteme verwenden zur Bereitstellung der Antriebsenergie pyrotechnisch wirkende Einheiten, wie Gasgeneratoren anstelle von Federsystemen. Bei diesen Systemen wird eine schlagartige Druckerhöhung in Folge einer Auslösung der pyrotechnischen Systeme dazu genutzt, um eine Verlagerung des Überrollkörpers in die Überschlagsposition zu bewirken.

Obgleich die bekannten Antriebseinheiten, d. h. sowohl federbasierend wirkende wie auch pyrotechnische Einheiten derart ausgelegt sind, dass eine zuverlässige Verlagerung des Überrollkörpers im Gefahrenfall, d. h. bei einem drohenden Überschlag, gewährleistet ist, ist nicht vollständig auszuschließen, dass es in Folge eines unsachgemäßen Betriebs des Fahrzeuges bei einer Auslösung der Antriebseinheit nicht zu einer vollständigen Aufstellung des Überrollkörpers kommt.

DE 10 2006 057 030 A1 offenbart ein Überrollschutzsystem gemäß dem Oberbegriff des Anspruchs 1.

Der Erfindung liegt die Aufgabe zugrunde, ein Überrollschutzsystem der eingangs genannten Art bereitzustellen, welche auch bei nicht sachgemäßem Betrieb eine zuverlässige Verlagerung des Überrollkörpers in die Überschlagsposition gewährleistet.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass der Überrollkörper in der Ruhelage mit einer zweiten Antriebseinheit in Wirkverbindung steht, wobei diese zur Verlagerung des Überrollkörpers in Richtung auf die Überschlagsposition ausgebildet ist. Bei der zweiten Antriebseinheit handelt es sich um eine weitestgehend selbstständige, von der primär zur Verstellung des Überrollkörpers vorgesehenen ersten Antriebseinheit unabhängige sekundäre Antriebseinheit, die ergänzend die Möglichkeit zur Verlagerung des Überrollkörpers in Richtung auf die Überschlagsposition bietet. Die zweite Antriebseinheit mit einer eigenständigen Antriebsenergie bildet somit ein Sicherungssystem, welches im Falle einer zwar unwahrscheinlichen, nicht vollständig durch die erste Antriebseinheit bewirkten Aufstellung gewährleistet, dass der Überrollkörper auch in diesem Fall bis in die für die Insassensicherheit bei einem Überschlag erforderliche Überschlagsposition gelangt. Die zweite Antriebseinheit stellt ggf. die für eine vollständige Verstellung fehlende Antriebsenergie bereit, die bspw. deshalb erforderlich sein kann, weil in unsachgemäßer Weise Hindernisse im Ausfahrbereich des Überrollkörpers angeordnet sind, die eine gesteigerte Antriebsenergie zur Verlagerung des Überrollkörpers in die Überschlagsposition erforderlich machen.

Nach der Erfindung ist die zweite Antriebseinheit zur vollständigen Verlagerung des Überrollkörpers aus der Ruhelage in die Überschlagsposition ausgebildet. Gemäß der Erfindung weist die zweite Antriebseinheit eine Antriebsenergie auf, die für sich genommen ausreichend ist, um eine vollständige Verlagerung des Überrollkörpers aus der Ruhelage in die Überschlagsposition zu bewirken. Eine Verlagerung des Überrollkörpers bis in die Überschlagsposition kann somit auch dann erfolgen, wenn die erste Antriebseinheit vollständig ausfällt. Bei einem entsprechend ausgestalteten Überrollschutzsystem bilden die erste und zweite Antriebseinheit ein redundantes System, nachdem auch bei einem vollständigen Versagen der ersten Antriebseinheit durch die zweite Antriebseinheit eine Verlagerung in die Überschlagsposition gewährleistet wird. Die Funktions- bzw. Betriebssicherheit eines entsprechend ausgestalteten Überrollschutzsystems wird somit gegenüber bekannten Überrollschutzsystemen mit nur einer Antriebseinheit in ergänzendem Maße gesteigert. Einem Ausfall des Überrollschutzsystems im Gefahrenfall wird somit besonders zuverlässig vorgebeugt.

Die grundsätzlich freie Ausgestaltung der zweiten Antriebseinheit bezieht sich auch auf die zur Aktivierung führende Ansteuerung der zweiten Antriebseinheit sowie den Zeitpunkt bzw. die Voraussetzungen zu deren Aktivierung. So kann das Überrollschutzsystem bzw. die zweite Antriebseinheit derart ausgestaltet sein, dass eine Aktivierung der zweiten Antriebseinheit nur im Falle eines Versagens der ersten Antriebseinheit erfolgt, so dass für den Fall, dass bereits die erste Antriebseinheit eine vollständige Verlagerung bewirkt, die zweite Antriebseinheit inaktiv bleibt. Eine Aktivierung der zweiten Antriebseinheit könnte auf solche Fälle beschränkt werden, in denen die erste Antriebseinheit vollständig versagt bzw. es nicht zu einem vollständigen Aufstellen des Überrollkörpers in die Überschlagsposition kommt.

Nach einer vorteilhaften Weiterbildung der Erfindung befindet sich die zweite Antriebseinheit jedoch derart in Wirkverbindung mit der ersten Antriebseinheit, dass eine Aktivierung der ersten Antriebseinheit eine Aktivierung der zweiten Antriebseinheit bewirkt. Unter einer Aktivierung der Antriebseinheit wird dabei die Einleitung der grundsätzlich zur Freigabe der Antriebsenergie erforderlichen Maßnahmen verstanden, in deren Folge die Antriebsenergie eine Verstellung des Überrollkörpers bewirkt. Im Falle dieser Weiterbildung der Erfindung, wonach durch eine Aktivierung der ersten Antriebseinheit auch eine Aktivierung der zweiten Antriebseinheit erfolgt, stehen somit für die Verlagerung des Überrollkörpers in die Überschlagsposition die Antriebsenergien beider Antriebseinheiten gleichzeitig zur Verfügung. Diese Ausgestaltung der Erfindung gewährleistet in besonderem Maße eine zuverlässige Aufstellung des Überrollkörpers in die Überschlagsposition. Auch im Falle einer Hemmung der Aufstellbewegung, bspw. durch im Aufstellbereich des Überrollkörpers angeordnete Hindernisse bewirkt die durch die zweite Antriebseinheit zusätzlich zur Verfügung gestellte Antriebsenergie eine zuverlässige Aufstellung des Überrollkörpers. Insbesondere die vorteilhafterweise vorgesehene Ausgestaltung der zweiten Antriebseinheit derart, dass diese zur vollständigen Verlagerung aus der Ruhelage in die Überschlagsposition ausgebildet ist, gewährleistet in besonderem Maße die Funktionssicherheit des Überrollschutzsystems.

Die Ausgestaltung der vorstehend beschriebenen Weiterbildung des Überrollschutzsystems, wonach eine Aktivierung der ersten Antriebseinheit auch, im Wesentlichen gleichzeitig, eine Aktivierung der zweiten Aktivierungseinheit bewirkt, ist grundsätzlich frei wählbar, wobei dies bspw. durch eine zeitgleiche Ansteuerung der ersten und zweiten Antriebseinheit bzw. deren Auslösemechanismen, eine entsprechend ausgebildete mechanische Kopplung oder dergleichen erfolgen kann.

Nach einer besonders vorteilhaften Ausgestaltung der Erfindung weist das Überrollschutzsystem jedoch Verriegelungsmittel auf, die den Überrollkörper in der Ruhelage sowohl gegenüber der ersten als auch gegenüber der zweiten Antriebseinheit arretieren, wobei diese Verriegelungsmittel derart ausgebildet sind, dass eine Aktivierung der ersten Antriebseinheit eine Aufhebung der Arretierung bewirkt, in deren Folge die Antriebsenergie beider Antriebseinheiten verstellend auf den Überrollkörper wirken. Gemäß dieser Ausgestaltung der Erfindung ist der Überrollkörper durch die Verriegelungsmittel in der Ruhelage arretiert, wobei die Aufhebung der durch die Verriegelungsmittel bewirkten Arretierung eine Verlagerungsmöglichkeit durch die erste und zweite Antriebseinheit erlaubt.

Diese Weiterbildung der Erfindung erlaubt es ferner, den Überrollkörper über für beide Antriebseinheiten wirkende Verriegelungsmittel in der Ruhelage festzulegen und eine Aktivierung des Überrollschutzsystems durch eine alleinige Aktivierung der ersten, primären Antriebseinheit zu bewirken. Aufgrund der für beide Antriebseinheiten bestehenden Wirkung der Verriegelungsmittel kann somit auf separate, nur für die zweite Antriebseinheit vorgesehene Verriegelungsmittel verzichtet werden. Hierdurch wird die Funktionssicherheit des Überrollschutzsystems in ergänzender Weise gesteigert, nachdem nur ein einziges, die Verriegelungsmittel aufweisendes Verriegelungssystem angesteuert werden muss.

In ergänzender Weise - zur Erhöhung der Funktionssicherheit - trägt dabei die nach einer vorteilhaften Weiterbildung der Erfindung vorgesehene Ausgestaltung des Überrollschutzsystems bei, wonach eine Aktivierung der ersten Antriebseinheit bereits eine Aufhebung der durch die Verriegelungsmittel in der Ruhelage bewirkten Arretierung zur Folge hat. Es kann vollständig auf eine separate Verriegelung der zweiten Antriebseinheit verzichtet werden, da diese über die für die erste Antriebseinheit wirkenden Verriegelungsmittel "mit" arretiert ist. Im Gefahrenfall erfolgt dabei eine Auflösung der Arretierung durch eine Ansteuerung der ersten Antriebseinheit, so dass die erste und zweite Antriebseinheit eine Verlagerung des Überrollkörpers in Richtung auf die Überschlagsposition bewirken.

Die Ausgestaltung der Verriegelungsmittel zur Arretierung des Überrollkörpers sowie deren Anordnung kann grundsätzlich in beliebiger Weise erfolgen. Nach einer besonders vorteilhaften Ausgestaltung der Erfindung sind die Verriegelungsmittel zur Arretierung des Überrollkörpers jedoch an der ersten Antriebseinheit angeordnet. Gemäß dieser Weiterbildung der Erfindung bewirken die Verriegelungsmittel in der Ruhelage eine Festlegung des Überrollkörpers an der ersten Antriebseinheit, vorzugsweise an einem Gehäuse der ersten Antriebseinheit. Als Verriegelungsmittel können bspw. Sprengringe oder Bolzen verwendet werden, welche den Überrollkörper formschlüssig an der Antriebseinheit, bspw. deren Gehäuse, festlegen. Die Verriegelungsmittel sind dabei vorzugsweise derart ausgebildet, dass die im Falle der Aktivierung der ersten Antriebseinheit auf die Verriegelungsmittel unmittelbar oder mittelbar wirkende Kraft, bspw. eine über den Überrollkörper auf die Verriegelungsmittel wirkende Kraft, die Verriegelungsmittel zerstört oder in eine Freigabeposition verlagert.

Erfindungsgemäß weist die erste Antriebseinheit einen Gasgenerator, insbesondere Mikrogasgenerator auf. Eine Auflösung der Arretierung erfolgt daher in Folge der über den Überrollkörper auf das Verriegelungsmittel wirkenden, durch die Aktivierung des Gasgenerators erzeugten Antriebsenergie. Zur Verwendung eines Gasgenerators weist dabei die erste Antriebseinheit einen Druckraum auf, indem sich bei Aktivierung des Gasgenerators schlagartig ein Überdruck ausbildet, welcher zur Verlagerung des Überrollkörpers genutzt wird. Zur Übertragung des Überdrucks auf den Überrollkörper kann bspw. ein vorzugsweise vorzusehendes, mit dem Überrollkörper verbundenes Kopplungselement genutzt werden, welches derart in den Druckraum hineinragt, dass aufgrund der Druckerhöhung das Kopplungselement aus dem Druckraum heraus befördert wird und dabei den Überrollkörper in die Überschlagsposition verlagert. Die Verlagerungsbewegung bzw. die auf das Kopplungselement wirkende Kraft ist dabei ausreichend, um bestehende, durch die Verriegelungsmittel erzeugte Arretierungen aufzulösen. Bspw. ist die Antriebsenergie ausreichend, um vorzugsweise zwischen dem Kopplungselement und der Antriebseinheit zur Lagesicherung des Überrollkörpers angeordnete Sprengringe aufzubrechen. Durch die Auflösung der Verriegelung erfolgt dann auch eine Freigabe der Antriebsenergie der zweiten Antriebseinheit, so dass diese gemeinsam eine Verlagerung des Überrollkörpers in die Überschlagsposition bewirken.

Die Ausgestaltung der zweiten Antriebseinheit kann grundsätzlich in beliebiger Weise erfolgen. So kann diese einen Gasgenerator, insbesondere Mikrogasgenerator aufweisen. Nach einer besonders vorteilhaften Ausgestaltung der Erfindung weist die zweite Antriebseinheit jedoch ein Federelement auf, das den Überrollkörper in der Ruhelage in Richtung auf die Überschlagsposition vorspannt. Die Verwendung eines in der Ruhelage vorgespannten Federelements zur Vorspannung des Überrollkörpers in Richtung auf die Überschlagsposition und somit zur Bereitstellung einer Antriebsenergie zeichnet sich durch die hohe Funktionssicherheit aus. Das Federelement ist dabei vorzugsweise derart ausgestaltet, dass es den Überrollkörper in der Ruhelage derart in Richtung auf die Überschlagsposition vorspannt, dass eine vollständige Verlagerung des Überrollkörpers in die Überschlagsposition allein durch die zweite Antriebseinheit bewirkt werden kann.

Wie bereits zuvor dargestellt, besteht grundsätzlich die Möglichkeit, die zweite Antriebseinheit mit einem separaten Auslösesystem zu versehen. Im Falle der vorstehend beschriebenen Weiterbildung der Erfindung, wonach die zweite Antriebseinheit gemeinsam mit der ersten Antriebseinheit durch für beide Antriebseinheiten wirksame Verriegelungsmittel arretiert ist, die durch eine Aktivierung der ersten Antriebseinheit aufgelöst werden kann, erfolgt bei einer Ausgestaltung der zweiten Antriebseinheit mit einem Federelement eine besonders zuverlässige Freigabe der zweiten Antriebseinheit durch Auflösen der Verriegelung der ersten Antriebseinheit, so dass auf eine separate Entriegelung zur Freigabe der Vorspannung für die zweite Antriebseinheit verzichtet werden kann. Die durch die zweite Antriebseinheit gemäß dieser Weiterbildung der Erfindung bereitgestellte Vorspannung gewährleistet somit in besonderem Maße, dass es auch im Falle von Hindernissen im Ausfahrbereich des Überrollkörpers zu einer vollständigen Verlagerung des Überrollkörpers in die Überschlagsposition kommt.

Die Anordnung eines oder mehrerer Federelemente im Falle der Verwendung einer zweiten Antriebseinheit gemäß vorstehend beschriebener Weiterbildung der Erfindung ist grundsätzlich frei wählbar. Nach einer besonders vorteilhaften Ausgestaltung der Erfindung ist das Federelement, vorzugsweise zwei Federelemente, jedoch innerhalb des Überrollkörpers, bevorzugt innerhalb des als Profilkörper ausgebildeten Überrollkörpers, angeordnet. Diese Ausgestaltung der Erfindung gewährleistet zum einen eine hohe Funktionssicherheit der Federelemente und erlaubt es zudem, das erfindungsgemäße Überrollschutzsystem mit zwei Antriebseinheiten, einem ersten primären und einem zweiten sekundären, besonders klein und kompakt auszubilden. Auf eine Führung der Federelemente bzw. auf das Vorsehen von Mitteln zur Lagesicherung der Federelemente kann durch diese Weiterbildung der Erfindung verzichtet werden.

Die Funktionsweise der zweiten Antriebseinheit mit einem gemäß einer vorteilhaften Weiterbildung vorgesehenen Federelement macht es erforderlich, dass die Federelemente einerseits gegenüber dem Überrollkörper und andererseits gegenüber einer Anlagefläche abgestützt sind. Nach einer besonders vorteilhaften Ausgestaltung der Erfindung sind die Federelemente dabei gegenüber einer mit dem Gehäuse der ersten Antriebseinheit verbundenen Anlagefläche, bspw. eine Stützplatte abgestützt. Diese Ausgestaltung der Erfindung ermöglicht es im Falle der Verwendung einer zweiten, mit einem Federelement versehenen Antriebseinheit, das Überrollschutzsystem als einzeln montierbare Baueinheit auszugestalten, wobei die Federelemente innerhalb des Überrollschutzsystems abgestützt sind. Das Gehäuse der ersten Antriebseinheit ist dabei besonders vorteilhafterweise derart ausgebildet, dass es eine Anbindung des Überrollschutzsystems an einer Rohbaustruktur ermöglicht, so dass auf weitere Montageschritte zur Anordnung des Überrollschutzsystems an einem Fahrzeug verzichtet werden kann.

Nach einer besonders vorteilhaften Ausgestaltung der Erfindung ist der Überrollkörper in der Ruhelage an dem mit einer Rohbaustruktur verbindbaren Gehäuse der ersten Antriebseinheit montagestabil angeordnet. Hierunter wird im Rahmen der Anmeldung eine Verbindung von Überrollkörper und Gehäuse der ersten Antriebseinheit verstanden, die derart ausgebildet ist, dass die Verbindung zwischen dem Überrollkörper und der Antriebseinheit nach deren Montage aneinander während der gesamten nachfolgenden Transportvorgänge sowie der Montage am Fahrzeug bestehen bleibt, jedoch im Gefahrenfall eine Verlagerung nicht blockiert. Hierdurch wird die Handhabbarkeit des Überrollschutzsystems in ergänzender Weise gesteigert.

Ausführungsbeispiele der Erfindung werden nachstehend mit Bezug auf die Zeichnungen näher erläutert. In den Zeichnungen zeigen:
- Fig. 1: eine perspektivische Ansicht einer ersten Ausführungsform eines Überrollschutz-systems und
- Fig. 2: eine perspektivische Ansicht einer zweiten Ausführungsform eines Überroll-schutzsystems.

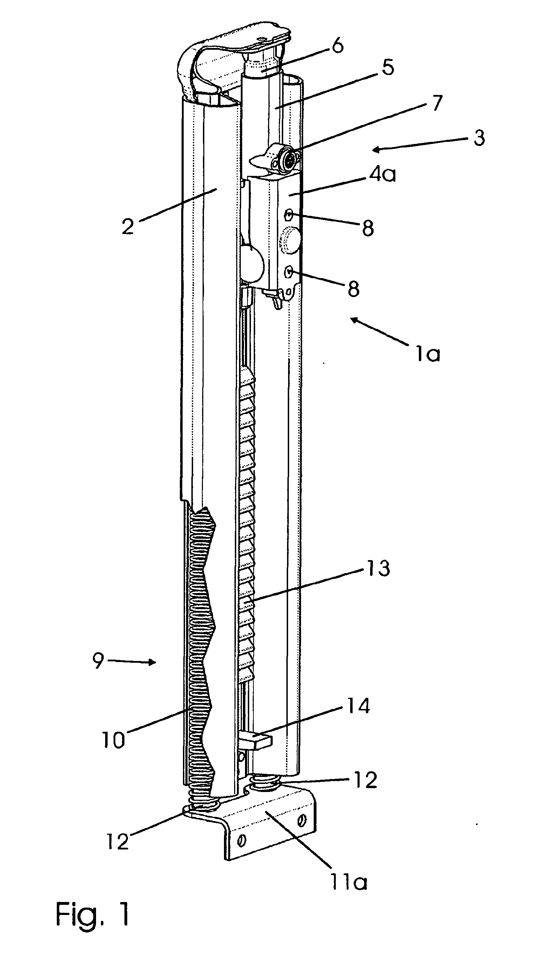

In Fig. 1 ist eine erste Ausführungsform eines Überrollschutzsystems 1a in einer Ruhelage des Überrollkörpers 2 dargestellt. Der Überrollkörper 2 ist an einem zur Anbindung des Überrollschutzsystems 1a an einer Rohbaustruktur eines Kraftfahrzeugs vorgesehenen Gehäuse 4a einer ersten Antriebseinheit 3 ortsfest gelagert. Hierzu weist das Gehäuse 4a der ersten Antriebseinheit 3 eine Führungshülse 5 auf, in der in der Ruhelage ein mit dem Überrollkörper 2 verbundenes Kopplungselement 6 angeordnet ist. Über das Kopplungselement 6 ist der Überrollkörper 2 dabei über ein hier nicht dargestelltes, als Sprengring ausgebildetes Verriegelungsmittel in der Führungshülse 5 arretiert, um Bewegungen des Überrollkörpers 2 in Längsachsenrichtung des Überrollkörpers zu verhindern. Der Sprengring verläuft dabei in der Ruhelage in korrespondierend angeordneten Nuten an dem Kopplungselement 6 und der Führungshülse 5.

Eine Verlagerung des Überrollkörpers 2 im Gefahrenfall, d. h. bei einem drohenden Überschlag, erfolgt durch eine Aktivierung eines in die Führungshülse 5 hineinragenden Mikrogasgenerators 7. In Folge einer Aktivierung des Mikrogasgenerators 7 baut sich innerhalb der Führungshülse 5 schlagartig ein Druck auf, der ausreichend ist, um eine Verlagerung des Kopplungselements 6 aus der Führungshülse 5 und aufgrund der bestehenden Verbindung des Kopplungselements 6 mit dem Überrollkörper 2 dessen Verlagerung in die Überschlagsposition zu bewirken. Der sich in der Führungshülse 5 aufbauende Druck ist dabei so bemessen, dass die zwischen der Führungshülse 5 und dem Kopplungselement 6 bestehende Verriegelung, die bspw. durch den Sprengring gebildet ist, aufgelöst wird.

Die Verriegelung des Überrollkörpers 2 in der Ruhelage ist dabei ferner derart ausgebildet, dass diese auch eine Verlagerung des Überrollkörpers 2 aufgrund einer durch eine zweite Antriebseinheit 9 aufgebrachten Federvorspannung blockiert. Die Federvorspannung der von der ersten Antriebseinheit 3 unabhängigen zweiten Antriebseinheit 9 resultiert dabei aus zwei innerhalb des Überrollkörpers 2 angeordneten, in der Ruhelage unter Vorspannung stehenden Schraubendruckfedern 10. Die Schraubendruckfedern 10, die im Wesentlichen die zweite Antriebseinheit kennzeichnen, spannen den Überrollkörper 2 in Richtung auf die Überschlagsposition vor. Hierzu sind die Schraubendruckfedern 10 einenends an ihren dem Überrollkörper 2 abgewandten Ende an einer Stützplatte 11a und anderenends innerhalb des Überrollkörpers 2 abgestützt. Zur Lagesicherung der Schraubendruckfedern 10 an der Stützplatte 11a dienen dabei zwei in die Enden der Schraubendruckfedern 10 hineinragende, mit der Stützplatte 11a verbundene Bolzen 12.

Eine Aktivierung der ersten Antriebseinheit 3, d. h. eine Auslösung 1 des Mirkogasgenerators 7 bewirkt eine Auflösung der zwischen dem Kopplungselement 6 und der Führungshülse 5 bestehenden Arretierung. In Folge dessen erfolgt dann auch eine Freigabe der Federenergie der zweiten Antriebseinheit 9, die eine Verlagerung des Überrollkörpers 2 in Richtung auf die Überschlagsposition bewirkt, wobei die erste und die zweite Antriebseinheit 3, 9 zeitgleich auf den Überrollkörper 2 wirken.

Nachdem beide Antriebseinheiten 3, 9 so bemessen sind, dass sie allein eine vollständige Aufstellung des Überrollkörpers 2 in die Überschlagsposition bewirken können, kann zuverlässig gewährleistet werden, dass es auch bei einer Hemmung der Ausfahrbewegung zu einer Verlagerung in die Überschlagsposition kommt.

Die Verlagerungsbewegung des Überrollkörpers 2 wird durch ein im unteren Bereich des Überrollkörpers 2 angeordnetes Anschlagelement 14 begrenzt, welches in der Überschlagsposition mit einer Unterseite des Gehäuses 4a der Antriebseinheit 3a in Eingriff gelangt und eine Weiterverlagerung des Überrollkörpers 2 blockiert. Zur Sicherung der Überschlagsposition des Überrollkörpers 2, d. h. um zu verhindern, dass der Überrollkörper 2 in Richtung auf die Ruhelage zurückverlagert wird, ist an einer der Antriebseinheit 3 zugewandten Innenseite des Überrollkörpers 2 eine Zahnstange 13 angeordnet, welche mit einem in Richtung auf die Zahnstange 13 vorgespannten Zahnstangenprofil an dem Gehäuse 4a der Antriebseinheit in Eingriff gelangt.

In der Überschlagsposition wirken die Zahnstange 13 sowie das Zahnstangenprofil zusammen, so dass die in Längsachsenrichtung auf den Überrollkörper 2 im Überschlagsfall wirkende Lasten über das Zahnstangen profil 13 und das Gehäuse 4a der Antriebseinheit 3 auf die Rohbaustruktur übertragen werden, wobei hierzu das Gehäuse 4a über Befestigungsöffnungen 8 mit der Rohbaustruktur verschraubt ist.

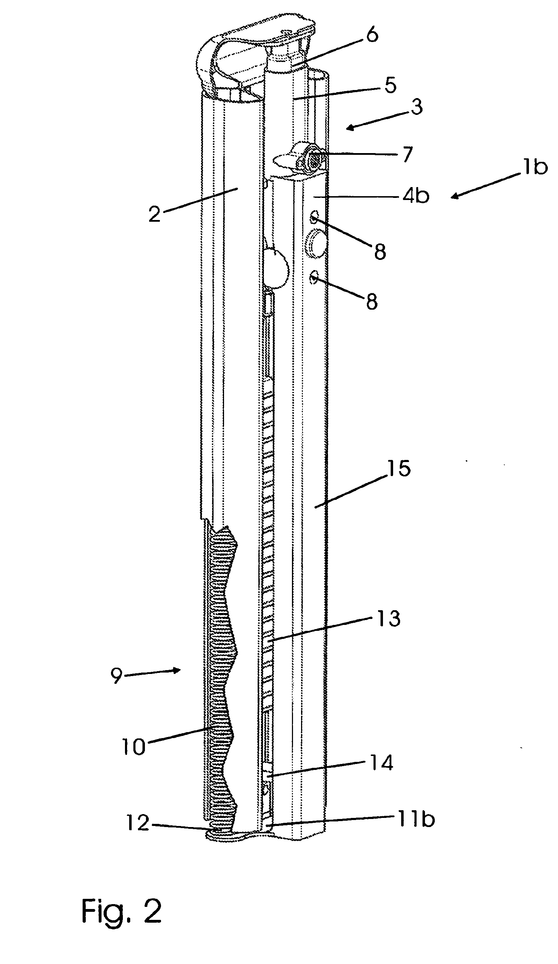

Das in Fig. 2 dargestellte Ausführungsbeispiel eines Überrollschutzsystems 1b unterscheidet sich von dem in Fig. 1 dargestellten Überrollschutzsystem 1a dadurch, dass das Gehäuse 4b der Antriebseinheit 3 über einen Steg 15 mit einer Stützplatte 11b verbunden ist. Im Übrigen ist die Funktionsweise des Überrollschutzsystems 1b mit dem in Fig. 1 dargestellten Überrollschutzsystem 1a identisch. Die abweichende Ausgestaltung, d. h. die Verbindung der Stützplatte 11b mit dem Gehäuse 4b der Antriebseinheit 3 ermöglicht es, das Überrollschutzsystem 1b durch alleinige Befestigung des Antriebsgehäuses 4b mit der Rohbaustruktur zu verbinden. Auf eine separate Befestigung der Stützplatte 11b, wie es im Falle der Stützplatte 11a des Überrollschutzsystems 1a der Fall ist, kann verzichtet werden.

## Patentansprüche

1. Überrollschutzsystem für Kraftfahrzeuge, mit
- einem aus einer Ruhelage in eine Überschlagsposition verstellbaren Überrollkörper und
- einer den Überrollkörper im Gefahrenfall aus der Ruhelage in die Überschlagsposition verstellenden ersten Antriebseinheit, wobei
der Überrollkörper (2) in der Ruhelage mit einer zweiten Antriebseinheit (9) in Wirkverbindung steht, **dadurch gekennzeichnet, dass** die zweite Antriebseinheit (9) zur Verlagerung des Uberrollkörpers (2) aus der Ruhelage in die Überschlagsposition ausgebildet ist und die erste Antriebseinheit (3) einen Gasgenerator (7) aufweist.

2. Überrollschutzsystem nach Anspruch 1, **dadurch gekennzeichnet, dass** die zweite Antriebseinheit (9) derart in Wirkverbindung mit der ersten Antriebseinheit (3) befindlich ist, dass eine Aktivierung der ersten Antriebseinheit (3) eine Aktivierung der zweiten Antriebseinheit (9) bewirkt.

3. Überrollschutzsystem nach einem der vorhergehenden Ansprüche, **gekennzeichnet durch** den Überrollkörper (2) in der Ruhelage gegenüber der ersten und/oder zweiten Antriebseinheit (3, 9) arretierende Verriegelungsmittel, die derart ausgebildet sind, dass eine Aktivierung der ersten Antriebseinheit (3) eine Aufhebung der **durch** die Verriegelungsmittel hergestellten Arretierung bewirkt.

4. Überrollschutzsystem nach einem der vorhergehenden Ansprüche, **dadurch gekennzeichnet, dass** die Verriegelungsmittel zur Arretierung des Überrollkörpers (2) an der ersten Antriebseinheit (3) ausgebildet sind.

5. Überrollschutzsystem nach einem der vorhergehenden Ansprüche, **dadurch gekennzeichnet, dass** der Gasgenerator (7) der ersten Antriebseinheit (3) als Mikrogasgenerator ausgebildet ist.

6. Überrollschutzsystem nach einem der vorhergehenden Ansprüche, **dadurch gekennzeichnet, dass** die zweite Antriebseinheit (9) ein Federelement (10) aufweist, das in der Ruhelage des Überrollkörpers (2) derart angeordnet ist, dass es den Überrollkörper (2) in Richtung auf die Überschlagsposition vorspannt.

7. Überrollschutzsystem nach einem der vorhergehenden Ansprüche, **dadurch gekennzeichnet, dass** ein mit dem Überrollkörper (2) verbundenes Kopplungselement (6) in einer sich über einen Teilbereich des Überrollkörpers (2) erstreckenden Führungshülse (5) der ersten Antriebseinheit (3) angeordnet ist.

8. Überrollschutzsystem nach einem der vorhergehenden Ansprüche, **dadurch gekennzeichnet, dass** das Federelement (10) der zweiten Antriebseinheit (9) innerhalb des Überrollkörpers (2) angeordnet ist, bevorzugt innerhalb des als Profilkörper (2) ausgebildeten Überrollkörpers.

9. Überrollschutzsystem nach einem der vorhergehenden Ansprüche, **dadurch gekennzeichnet, dass** das Federelement (10) gegenüber einer mit einem Gehäuse (4b) der ersten Antriebseinheit (3) verbundenen Anlagefläche (11b) abgestützt ist.

10. Überrollschutzsystem nach einem der vorhergehenden Ansprüche, **dadurch gekennzeichnet, dass** der Überrollkörper (2) in der Ruhelage an dem mit einer Rohbaustruktur verbindbaren Gehäuse (4a, 4b) der ersten Antriebseinheit (3) montagestabil angeordnet ist.

## Claims

1. A rollover protection system for motor vehicles, with
- a rollover body movable from a rest position into a rollover position and
- a first drive unit moving the rollover body in the event of a hazardous situation out of the rest position into the rollover position, wherein the rollover body (2) in the rest position is in operative connection with a second drive unit (9),
**characterized in that**
the second drive unit (9) is designed for moving the rollover body (2) from the rest position into the rollover position, and the first drive unit (3) has a gas generator (7).

2. The rollover protection system according to claim 1, **characterized in that** the second drive unit (9) is in operative connection with the first drive unit (3) such that an activation of the first drive unit (3) causes an activation of the second drive unit (9).

3. The rollover protection system according to one of the preceding claims, **characterized by** locking means locking the rollover body (2) in the rest position with respect to the first and/or second drive unit (3, 9), which are designed such that an activation of the first drive unit (3) causes a release of the locking produced by the locking means.

4. The rollover protection system according to one of the preceding claims, **characterized in that** the locking means for locking the rollover body (2) are formed at the first drive unit (3).

5. The rollover protection system according to one of the preceding claims, **characterized in that** the gas generator (7) of the first drive unit (3) is designed as a micro gas generator.

6. The rollover protection system according to one of the preceding claims, **characterized in that** the second drive unit (9) has a spring element (10) that is disposed in the rest position of the rollover body (2) such that it pre-tensions the rollover body (2) in the direction of the rollover position.

7. The rollover protection system according to one of the preceding claims, **characterized in that** a coupling element (6) connected to the rollover body (2) is disposed in a guide sleeve (5) of the first drive unit (3) extending beyond a partial region of the rollover body (2).

8. The rollover protection system according to one of the preceding claims, **characterized in that** the spring element (10) of the second drive unit (9) is disposed within the rollover body (2), preferably within the rollover body formed as a profile body (2).

9. The rollover protection system according to one of the preceding claims, **characterized in that** the spring element (10) is supported with respect to a contact surface (11b) connected to a housing (4b) of the first drive unit (3).

10. The rollover protection system according to one of the preceding claims, **characterized in that** the rollover body (2) in the rest position is disposed robustly assembled at the housing (4a, 4b) of the first drive unit (3) that is connectable to a body shell structure.

## Revendications

1. Système de protection contre les tonneaux pour des véhicules automobiles comprenant
- un corps de retournement pouvant être déplacé d'une position de repos dans une position de capotage et
- une première unité d'entraînement déplaçant le corps de retournement en cas de danger de la position de repos dans la position de capotage, dans lequel le corps de retournement (2) est en connexion active avec une seconde unité d'entraînement (9) dans la position de repos, **caractérisé en ce que** la seconde unité d'entraînement (9) est réalisée pour le déplacement du corps de retournement (2) de la position de repos dans la position de capotage et la première unité d'entraînement (3) présente un générateur de gaz (7).

2. Système de protection contre les tonneaux selon la revendication 1, **caractérisé en ce que** la seconde unité d'entraînement (9) se trouve en connexion active avec la première unité d'entraînement (3) de telle sorte qu'une activation de la première unité d'entraînement (3) entraîne une activation de la seconde unité d'entraînement (9).

3. Système de protection contre les tonneaux selon une des revendications précédentes, **caractérisé par** des moyens de verrouillage bloquant le corps de retournement (2) dans la position de repos par rapport à la première et/ou seconde unité d'entraînement (3, 9) qui sont réalisés de telle sorte qu'une activation de la première unité d'entraînement (3) entraîne une suppression du blocage réalisé par les moyens de verrouillage.

4. Système de protection contre les tonneaux selon une des revendications précédentes, **caractérisé en ce que** les moyens de verrouillage sont réalisés pour le blocage du corps de retournement (2) sur la première unité d'entraînement (3).

5. Système de protection contre les tonneaux selon une des revendications précédentes, **caractérisé en ce que** le générateur de gaz (7) de la première unité d'entraînement (3) est réalisé en tant que microgénérateur de gaz.

6. Système de protection contre les tonneaux selon une des revendications précédentes, **caractérisé en ce que** la seconde unité d'entraînement (9) présente un élément de ressort (10) qui est disposé dans la position de repos du corps de retournement (2) de telle sorte qu'il précontraint le corps de retournement (2) en direction de la position de capotage.

7. Système de protection contre les tonneaux selon une des revendications précédentes, **caractérisé en ce qu'**un élément de raccordement (6) relié au corps de retournement (2) est disposé dans un manchon de guidage (5) de la première unité d'entraînement (3) s'étendant sur une région partielle du corps de retournement (2).

8. Système de protection contre les tonneaux selon une des revendications précédentes, **caractérisé en ce que** l'élément de ressort (10) de la seconde unité d'entraînement (9) est disposé au sein du corps de retournement (2), de préférence au sein du corps de retournement réalisé en tant que corps profilé (2).

9. Système de protection contre les tonneaux selon une des revendications précédentes, **caractérisé en ce que** l'élément de ressort (10) est appuyé contre une surface d'appui (11b) reliée à un logement (4b) de la première unité d'entraînement (3).

10. Système de protection contre les tonneaux selon une des revendications précédentes, **caractérisé en ce que** le corps de retournement (2) est disposé de manière stable au montage dans la position de repos sur le logement (4a, 4b) de la première unité d'entraînement (3) pouvant être relié à une structure de construction brute.
